# EUROPEAN PATENT SPECIFICATION

(11) **EP 0 517 387 B1**
(45) Date of publication and mention of the grant of the patent: **09.08.1995**
(21) Application number: 92304408.5
(22) Date of filing: 15.05.1992
(51) Int. Cl.: B23Q 5/04, F16H 57/02, F16H 37/04

(54) **Rotary tool adapter**
Fräsvorsatz
Adapteur pour un outil rotatif

(30) Priority: 20.05.1991 JP 44754/91 U
(43) Date of publication of application: 09.12.1992
(73) Proprietor: KOYO SEIKO CO., LTD., Chuo-ku Osaka (JP)
(72) Inventor: Ueda, Kouichi, Shiki-gun, Nara (JP); Yasuhara, Shinji, Kashiwara-shi, Osaka (JP); Iwamoto, Hitoshi, Nara-shi (JP); Oku, Toshiaki, Higashiosaka-shi, Osaka (JP)
(74) Representative: Gibbs, Christopher Stephen

(56) References cited:
- FR-A- 2 189 169
- US-A- 4 795 293
- US-A- 4 960 405
- PATENT ABSTRACTS OF JAPAN vol. 13, no. 296 (M-846)(3644) 10 July 1989 & JP-A-10 87 125 (KOYO SEIKO)
- PATENT ABSTRACTS OF JAPAN vol. 9, no. 162 (M-394)(1885) 6 July 1985 & JP-A-60 034 239 (MIYANO)

## Description

This invention relates to a rotary tool adapter to be attached to a machine tool. Such rotary tool adapters are known e.g. from FR-A-2 189 169.

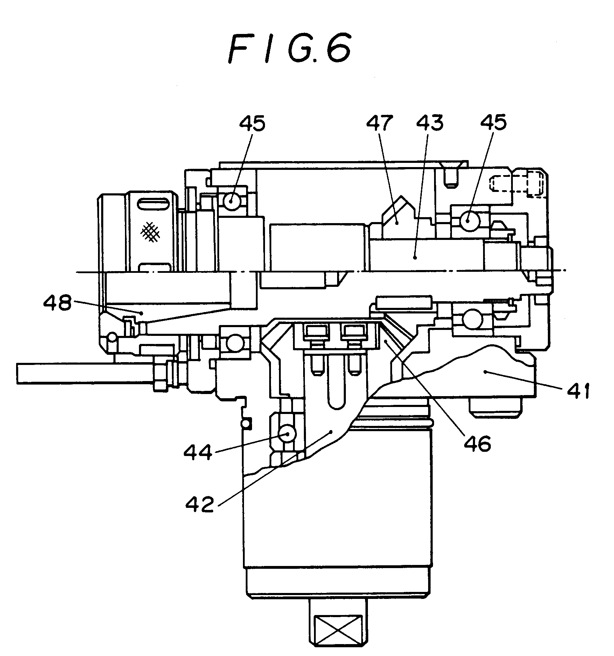

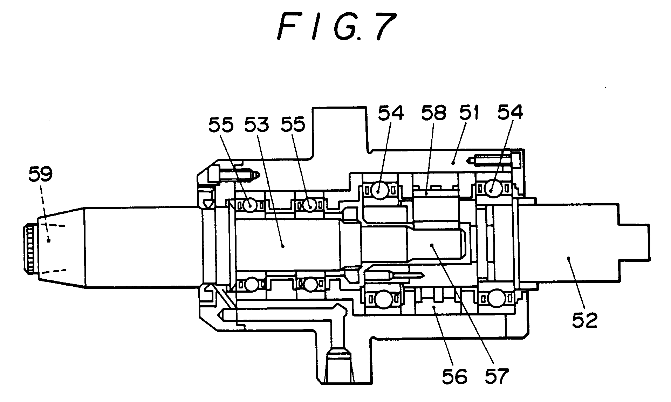

The accompanying Figures 6 and 7 show such adapters, that of Fig. 6 being a right-angled adapter and that of Fig. 7 a straight, speed-increasing adapter. In the angled rotary tool adapter for a turret lathe as shown in Fig. 6, first and second rotary shafts 42, 43 are inserted in the shape of the letter "T" through a T-shaped cylindrical casing 41 and supported rotatably on ball-and-roller bearings 44, 45 respectively. A bevel gear 46 is mounted fixedly on the inner end of the first rotary shaft 42 and a corresponding gear 47 is fixed to the second rotary shaft 43 so as to mesh with the first.

The other end of the first rotary shaft 42 projects outwardly from the casing 41 for connection to a driving shaft in a head of a machine tool, and the free end portion of the second rotary shaft 43 also projects outwardly from the casing and is provided with a socket 48 with which a rotary tool is to be engaged.

This rotary tool adapter is set on a rotary tool mounting portion of the head of the machine tool. During operation, the first rotary shaft 42 is joined to a driving shaft in the head, and a suitable rotary tool is engaged by the socket 48 formed at the free end portion of the second rotary shaft 43. Rotation of the driving shaft in the head rotates the first rotary shaft 42, and then the second rotary shaft 43, via the bevel gears 46, 47, so that the rotary tool processes a workpiece as it is rotated.

As can be seen from Fig. 7, a straight, speed-increasing rotary tool adapter has an input shaft 52 and an output shaft 53 inserted from opposite ends into a cylindrical casing 51 and supported rotatably on ball-and-roller bearings 54, 55 respectively. The inner end portion of the input shaft 52 is formed as a hollow cylinder, and a suitable number of insert holes for planetary rollers are formed in the cylindrical wall of the inner end portion, spaced at regular intervals in the circumferential direction. A fixed race 56 is attached to the portion of the inner circumferential surface of the casing which faces the planetary roller insert holes, and the inner end portion of the output shaft 53 is inserted into the interior of the cylindrical end of the input shaft 52 to form a sun roller 57. Planetary rollers 58 are inserted rotatably into the holes in the input shaft 52 so as to contact the fixed race 56 internally and the sun roller 57 externally.

The outer end portion of the input shaft 52, which projects outwardly from the casing 51, is formed so as to be joined to the driving shaft in the head of a machine tool, while the front end portion of the output shaft 53, which likewise projects outwardly from the casing 51, is provided with a socket 59 with which a rotary tool is to be engaged.

For operation this rotary tool adapter is set on a rotary tool mounting portion of the head of the machine tool. The input shaft 52 is joined to a driving shaft in the head, and a suitable rotary tool is engaged with the socket 59 formed in the output shaft 53. When the driving shaft in the head is rotated, the output shaft 53 is rotated at an increased speed via the input shaft 51 and a planetary roller mechanism (fixed race 56, planetary rollers 58 and sun roller 57), so that the rotary tool processes a workpiece as it is rotated at a high speed.

The angled rotary tool adapter of Fig. 6 is incapable of cutting an aluminium or brass workpiece at a high speed, and for this purpose requires a rotary tool having a speed-increasing mechanism. On the other hand, a straight speed-increasing rotary tool adapter such as that shown in Fig. 7 is incapable of processing a surface parallel to the driving shaft of the machine tool.

According to the conventional techniques, therefore, it is necessary to keep in stock enough rotary tool adapters of various specifications in accordance with the directions in which surfaces to be processed extend, the available space in the tool heads, and the dimensions and rotational speeds of the rotary tools. Providing comparatively expensive speed-increasing mechanisms for each model of rotary tool causes an inordinately high cost increase.

It is the aim of the present invention to provide a more versatile rotary tool adapter which solves the problem of the prior art rotary tool adapters.

A separable rotary tool adapter according to the present invention comprises on the one hand a low-speed rotary unit which is provided with a casing which can be fastened detachably to the head of a machine tool, and a rotary shaft supported rotatably on the casing and capable of being joined at one end to a driving shaft in the head of the machine tool, and on the other hand a high-speed rotary unit provided with a casing to be fastened detachably to the casing of the low-speed rotary unit, and a rotary shaft supported rotatably on the second casing and capable of direct or indirect engagement at its free end with a rotary tool, the low speed and high-speed units each comprising one part of a two-part planetary roller mechanism the two parts of which are engageable with and disengageable from each other and are connected respectively to the driving shaft in the low-speed rotary unit and to the driving shaft in the high speed rotary unit.

The engagement and disengagement of the two parts takes place preferably in the axial direction.

The invention may be embodied as a set of adapter units including a separable rotary tool adapter as aforesaid and an additional low speed unit, one of the low-speed units providing a straight transmission and the other providing an angled transmission. In the angled low-speed rotary unit, a part of the planetary roller mechanism is attached to an angled rotary shaft engaging at a right angle with a primary rotary shaft, which can be joined to the driving shaft, via a transmission mechanism such a bevel gearing.

The two parts of the planetary roller mechanism are preferably an assembly consisting of a fixed race, planetary rollers and a sun roller on one hand, and a part comprising planetary roller driving means such as retainers or shaft pins which are engageable with and disengageable from the planetary rollers, on the other hand.

When the high-speed rotary unit is combined with the low-speed rotary unit, the planetary rollers are engaged with the planetary roller driving members. When planetary roller driving shaft pins are employed, the shaft pins are inserted into pin insert holes in the planetary rollers. When planetary roller driving retainers are employed, the retainers are inserted into the spaces between the planetary rollers. The two casings are combined by means of bolts or other suitable fasteners, clamping the parts of the planetary gear in position.

The separable rotary tool adapter in which the low-speed rotary unit and the high-speed rotary unit are unitarily combined is set on a rotary tool mounting portion of a turret in a machine tool, for example a turret lathe. During this mounting operation, the rotary shaft of the low-speed unit is joined to a driving shaft in the turret, the casing of the low-speed rotary unit being fixed to the turret, and a suitable rotary tool is attached to the free end of the rotary shaft of the high-speed unit.

The driving shaft in the turret, either via first and second low speed shafts and bevel gears or (in the straight configuration) via the direct rotation of the first rotary shaft, causes the planetary roller driving retainers or pins to be rotated. The planetary rollers thus roll round the inner circumferential surface of the race. Owing to the planetary rollers thus revolving around the rotary shaft and rotating about their own axes, the sun roller is rotated at an increased speed. As a result the rotary tool processes a workpiece as it is rotated at a higher speed than the rotational speed of the driving shaft in the turret.

High- and low-speed rotary units of various specifications are provided by interchanging the combinations thereof in accordance with the direction in which the surface (outer circumferential surface or end surface) of a workpiece on a turret lathe extends, the available space in the turret and the dimensions and rotational speed of the tool used.

The above and other objects, features and advantages of embodiments of the present invention will become apparent from reading of the following description, in which an embodiment of the separable rotary tool adapter according to the present invention will be described with reference to the drawings. In the drawings:
Fig. 1 is a sectioned front elevation of a separable rotary tool adapter embodying the present invention;
Fig. 2 is a sectioned front elevation of an angled low-speed rotary unit A in the separable rotary tool adapter of Fig. 1;
Fig. 3 is a sectioned front elevation of a first example of a high-speed rotary unit B in the separable rotary tool adapter of Fig. 1;
Fig. 4 is a sectioned front elevation (taken along the line IV-IV in Fig. 5) of a second example of the high-speed rotary unit B in the separable rotary tool adapter;
Fig. 5 is a side elevation of the high-speed rotary unit of Fig. 4;
Fig. 6 is a sectioned front elevation of a conventional angled rotary tool adapter; and
Fig. 7 is a sectioned front elevation of a conventional straight speed-increasing rotary tool adapter.

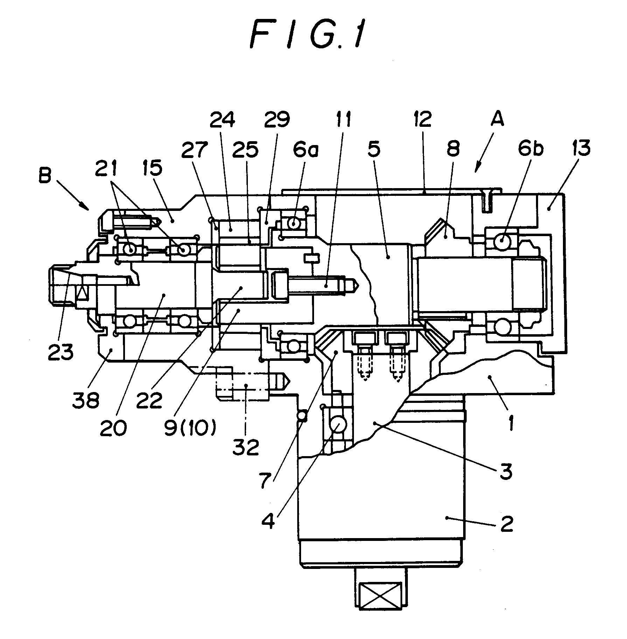

The separable rotary tool adapter shown in Figs. 1, 2 and 3 consists of an angled low-speed rotary unit A constituting an adapter body and joined detachably to a head of a machine tool, for example a turret of a turret lathe, and a high-speed rotary unit B attached interchangeably to the low-speed rotary unit A. A straight low speed unit could be provided instead of the angled unit, as will be described later.

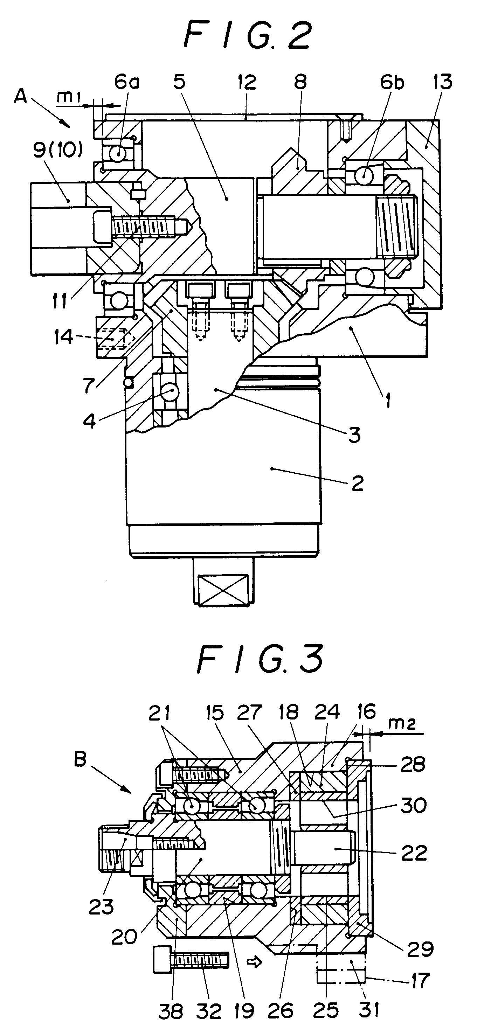

First, the angled low-speed rotary unit A will be described. As shown in Fig. 2, a casing for the low-speed rotary unit A consists of a hollow rectangular cross-sectionally square casing member 1, and a cylindrical casing member 2 formed so as to project from one surface of the casing member 1, and the hollows of these casing members communicate with each other. A first rotary shaft 3 is inserted in the cylindrical casing member 2 in the axial direction thereof and supported rotatably on ball-and-roller bearings 4. A second low-speed shaft 5 is inserted in the square casing member 1 and supported rotatably on a bearing 6a fitted in an opening at the front end of the hollow of the casing 1 and a bearing 6b fitted in an opening at the base end of the hollow of the casing 1 and pressed by a cover 13 (which will be referred to later). A bevel gear 7 mounted fixedly on the front end portion of the first rotary shaft 3 and a bevel gear 8 mounted fixedly on an intermediate portion of the second rotary shaft 5 mesh with each other.

The front end surface of the bearing 6a is set back from that of the square casing member 1, i.e. a high speed rotary unit mounting surface thereof, by a distance m₁. A description about this matter will be given later.

The base end portion of the first rotary shaft 3 projects outward form the cylindrical casing member 2 so as to be joined to a driving shaft in a head of a machine tool. At the front end portion of the second rotary shaft 5, planetary roller driving members projecting outward from the square casing member 1, for example, planetary roller driving retainers 9 or planetary roller driving shaft pins 10 are fixed thereto detachably with a bolt 11. The retainers 9 or planetary roller driving shaft pins 10 are formed in a projecting manner in parallel with the axis of the second rotary shaft and arranged in the circumferential direction thereof at regular intervals so as to be opposed to planetary rollers, which will be described later, in the high-speed rotary unit B.

Covers 12, 13 are attached to assembling openings formed at the portion of the square casing member 1 which is opposed to the inner end surface of the first rotary shaft 3, and at the portion of the casing member 1 which corresponds to the base end of the second rotary shaft 5, respectively, and threaded bores 14, 14 ... for use in fastening the high-speed rotary unit to this casing member are made in four corner portions of a high-speed rotary unit mounting surface thereof from which the planetary roller driving members project.

A straight low-speed rotary unit (not shown) will now be described. This low-speed rotary unit has only a cylindrical casing member like that 2 of the angled low-speed rotary unit A, and the second rotary shaft 5 and bevel gears 7, 8 are omitted. A first rotary shaft 3 extends from the casing and planetary roller driving members projecting outward from the cylindrical casing member 2 in the same manner as in the angled low-speed rotary unit are fixed detachably to the front end portion of the first rotary shaft with a bolt 11.

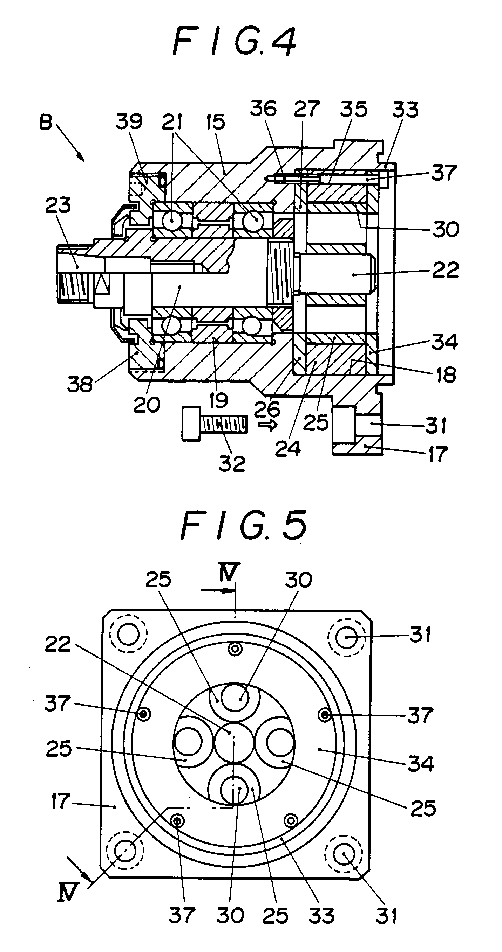

Two alternative high-speed rotary units B will now be described. As shown in Figs. 3 and 4, a casing 15 for the high-speed rotary unit B has a stepped cylindrical body, and a flange 17 (for example, a square flange as shown in Fig. 5) is formed at the end of a larger-diameter portion 16 on the side of the base end thereof. A hollow of the casing 15 consists of a larger-diameter bore 18 on the side of the base end thereof, and a smaller-diameter bore 19 on the side of the front end thereof, and a rotary shaft 20 is inserted in the casing 15 in the axial direction thereof and supported rotatably on ball-and-roller bearings 21 in the smaller-diameter bore 19. The base end portion of the rotary shaft 20 in the larger-diameter bore 18 in the casing 15 constitutes a sun roller 22 in the planetary speed-increasing mechanism, and a socket 23 with which a rotary tool is engaged is formed in the front end portion, which projects from the opening of a cover 38 at the front end of the casing 15, of the rotary shaft 20.

A suitable number of planetary rollers 25, for example, three or four, are fitted between the inner circumferential surface, i.e. a raceway surface of a race 24, which is fitted firmly in concentric relation with the sun roller 22 in the larger-diameter bore 18 in the hollow of the casing, and the outer circumferential surface of the sun roller 22. The planetary rollers 25 are positioned and restrained in the axial direction thereof between an annular spacer 27 fitted firmly in an stepped bottom portion 26 of the larger-diameter bore 18 in the hollow and a roller-holding ring 29 fitted firmly in a stepped portion 28 of the opening of the larger-diameter bore 18 or a holding ring 34 fitted in the larger-diameter bore 18. In the case where the planetary roller driving members in the low-speed rotary unit A consist at least of planetary roller driving pins 10, the planetary rollers 25 are provided therein with axially extending pin insert bores 30. (In the case where the planetary roller driving members consist of planetary roller driving retainers 9, the pin insert bores 30 may or may not be provided.)

In order to join the high-speed rotary unit B to the relative mounting surface of the angled low-speed rotary unit A, the bolts 32 inserted into the bolt holes 31, as shown in Figs. 3, 4 and 5, which are made in the flange 17 in the high-speed rotary unit B so as to extend in the axial direction thereof and so as to be spaced at 90° intervals in the circumferential direction, are screwed to the threaded bores 14 in the high-speed rotary unit mounting surface, so that the planetary rollers 25 engage the planetary roller driving members. When the planetary roller driving shaft pins 10 are employed, they are inserted into the pin insert bores 30 in the planetary rollers 25, and when the planetary roller driving retainers 9 are employed, they are inserted into the clearances among the planetary rollers 25.

As a result, the end surface of the flange 17 in the high-speed rotary unit B is opposed to the front end surface of the square casing member 1 in the angled low-speed rotary unit A, i.e. the high-speed rotary unit mounting surface.

During the assembling of this structure, the following means are adopted for firmly fitting the race 24 in the larger-diameter bore 18 in the hollow.

In the first example, i.e. Fig. 3, the outer end surface of the race 24 projects slightly from the stepped portion 28 of the opening of the larger-diameter bore 18 and contacts the roller-holding ring 29 as shown in Fig. 3. The axially outer end surface of the roller holding ring 29, the inner end surface of which contacts the outer end surface of the race 24, projects by a distance m₂ from the end surface of the flange 17 of the casing 15, and this distance m₂ is larger than the recess distance m₁ already mentioned of the front end surface of the bearing 6a into the angled low-speed rotary unit A by a holding margin δ.

It is necessary that the holding margin δ be set to not lower than a predetermined level so as to fix the race 24 reliably. On the other hand if the holding margin δ is too large, distortion occurs in the race 24. In practice δ is set to 5-40 ».

During the combining of the angled low-speed rotary unit A with the high-speed rotary unit B, the bolts 32 are tightened to cause the roller-holding ring 29 to be fitted into the opening at the front end of the hollow of the square casing member 1 and to engage the outer end surface of the outer race of the bearing 6a in the angled low-speed rotary unit A. Consequently, the race 24 is pressed by the outer race of the bearing 6a via the roller-holding ring 29 by a distance corresponding to the holding margin δ, whereby the race 24 is fixed.

In the second example, shown in Fig. 4, there is no stepped portion 28 of the opening in the larger-diameter bore 18; instead, an annular projection 33 coaxial with the opening of the larger-diameter bore is formed on the end surface of the flange 17.

The race 24 is fitted in the larger-diameter bore 18 so as to be held between the annular spacer 27 and holding ring 34. Bolt holes 35 extending axially through the annular spacer 27, race 24 and holding ring 34 are provided at circumferentially regular intervals, and threaded bores 36 corresponding to these bolt holes are present in the stepped bottom portion 26 of the larger-diameter bore 18. The annular spacer 27, race 24 and holding ring 34 are tightened as a unit by means of the bolts 37 screwed into the threaded bores 36, so that the race 24 is fixed. The depth of the larger-diameter bore 18 is sufficiently larger than the total thickness of the annular spacer 27, race 24 and holding ring 34, to ensure that the head portions of the bolts 37 do not project from the end surface of the annular projection of the casing 15.

Owing to the existence of these bolt holes 35, the surface of the race 24 is deformed at the portions thereof which correspond to the bolt holes as the planetary rollers 25 roll on this surface but, if the number of the bolt holes 35 and threaded bores 36 is set larger or smaller than that of the planetary rollers 25 by an odd number (1, 3 ...), this adverse effect occurring when the planetary rollers 25 pass the deformed portions of the surface of the race decreases.

During the combining of the angled low-speed rotary unit A with the high-speed rotary unit B, the bolts 32 are tightened to cause the annular projection 33 to be fitted in the opening at the front end of the hollow of the square casing member 1, the front end surface thereof to engage the outer end surface of the outer race of the bearing 6a in the bent low-speed rotary unit A, and the end surface of the flange 17 to be opposed to the high-speed rotary unit mounting surface.

There are in practice various types of low-speed rotary units, and the set-back distance m₁ of the front end surface of the bearing 6a of each low-speed rotary unit A is not uniform. Therefore, in the first example, the distance m₂ by which the roller-holding ring 29 projects is regulated on a job site so as to obtain a predetermined holding margin but, in the second example, this regulating operation is not required.

A cover member 38 at the front end of the casing 15 in the high-speed rotary unit B serves as a holding member for the ball-and-roller bearings 21. In the first example, shown in Fig. 3, the cover member 38 is fastened to the front end surface of the casing 15 with bolts, while in the second example, shown in Fig. 4, the cover member 38 is engaged with a threaded portion 39 at the opened side of the smaller-diameter bore 19 in the casing 15. In the latter case, the screwing direction of the cover member 38 is set in agreement with the rotational direction of the rotary shaft 20 for preventing the cover member from being loosened while the adapter is in use, and the cover member is ready to be turned in the tightening direction due to a seal contacting the same.

The combining of the straight low-speed rotary unit with the high-speed rotary unit B is also done in the same manner as mentioned manner.

The separable rotary tool adapter in which the low-speed rotary unit and high-speed rotary unit are combined unitarily is set on a rotary tool mounting portion of a machine tool, for example, such a portion of a turret in a turret lathe. During this time, the first rotary shaft 3 is joined to the driving shaft in the turret, and the base end portion of the cylindrical casing member 2 of the low-speed rotary unit A is fixed to the turret, a suitable rotary tool being engaged with the socket 23 at the front end portion of the second rotary shaft 5.

When the driving shaft in the turret is rotated with an angled low-speed rotary unit A joined to the high-speed rotary unit, the second rotary shaft 5 is rotated via the first rotary shaft 3 and bevel gears 7, 8. The planetary roller driving retainers 9 or planetary roller driving shaft pins 10 revolve round the axis of the second rotary shaft 5, so that the planetary rollers 25 revolve round the same axis as they roll on the inner circumferential surface of the race 24. Owing to the planetary rollers 25 revolving round the axis of the rotary shaft 5 and rotating on their own axes, the sun roller 22 is rotated at a speed which is higher than the rotational speed of the second rotary shaft 5. As a result the rotary tool is rotated at a speed higher than that of the driving shaft in the turret, and carries out the processing of a workpiece.

When the driving shaft in the turret is rotated with a straight low-speed rotary unit joined to the high-speed rotary unit, the first rotary shaft 3 is rotated. The planetary roller driving retainers 9 or planetary roller driving shaft pins 10 revolve round the axis of the first rotary shaft 3, so that the planetary rollers 25 revolve round the same axis as they roll on the inner circumferential surface of the race 24. Consequently, the rotary tool is rotated at a speed higher than the rotational speed of the driving shaft in the turret and processes a workpiece in the same manner as the rotary tool on the adapter employing the angled low-speed rotary unit A.

A turret lathe can be used correspondingly to the direction in which the surface (outer circumferential surface and an end surface) to be processed of a workpiece faces, by using the angled low-speed rotary unit A and straight low-speed rotary unit interchangeably with the high-speed rotary unit B used in common.

The size of each portion of the high-speed rotary unit B is varied in accordance with the dimensions of the space in the turret and the sizes and rotational speeds of the rotary tools. If such variously-sized high-speed rotary units B are available, they can be used suitably for various dimensions of the space in the turret in a turret lathe and various sizes and rotational speeds of rotary tools by changing one rotary unit B to another and fixing the resultant rotary unit B to a single low speed rotary unit A with the bolts 32 removed from and driven into the rotary units B, A. Moreover, if various sizes of planetary roller driving members, i.e. planetary roller driving shaft pins 10 or planetary roller driving retainers 9 are used by changing one type of driving member to another and installing the resultant driving members with the bolts 11 removed from and driven into the rotary shaft 5, the specifications can be further diversified.

The above-described separable rotary tool adapter can be used for any direction in which the surface (an outer circumferential surface and an end surface) of a workpiece to be processed in a machine tool, for example a turret lathe, faces, by using the angled low-speed rotary unit and the straight low-speed rotary unit selectively and the high-speed rotary unit in common.

The size of each portion of the high-speed rotary unit is varied in accordance with the dimensions of the space in the turret and the sizes and rotational speeds of the rotary tools. If such variously-sized high-speed rotary units are available, they can be used suitably for various dimensions of the space in the turret in a turret lathe and various sizes and rotational speeds of rotary tools by changing one high-speed rotary unit to another and fixing the resultant high-speed rotary unit to a single low-speed rotary unit.

Therefore, the separable rotary tool adapter according to the present invention can be applied to various types of machine tools and various kinds of high-speed processing operations by a combination of a low-speed rotary unit and a high-speed rotary unit without providing a lot of special rotary tool adapters of various specifications.

To summarise, a rotary tool adapter is made in two separable parts: a low-speed unit A to be fitted to the machine tool and a high-speed unit B which holds the tool. In order to provide the speed increase the assembled adapter contains a planetary gear assembly which straddles the interface between the two units. The high-speed unit B contains the outer ring, the planets and the sun, which is part of the output shaft, while the low-speed unit A contains a driving means for driving the planets so as to rotate the sun at an increased speed.

By using either a straight or (as shown) a right-angled low-speed unit A and by having various sizes of high-speed unit B a wide variety of configurations is possible with a small number of basic parts.

## Claims

1. A separable rotary tool adapter comprising on the one hand a low-speed rotary unit (A) which is provided with a casing (2) which can be fastened detachably to the head of a machine tool, and a rotary shaft (3) supported rotatably on the casing (2) and capable of being joined at one end to a driving shaft in the head of the machine tool, and on the other hand a high-speed rotary unit (B) provided with a casing (15) to be fastened detachably to the casing (2) of the low-speed rotary unit (A), and a rotary shaft (20) supported rotatably on the second casing (15) and capable of direct or indirect engagement at its free end with a rotary tool, the low speed and high-speed units (A,B) each containing one part of a two-part planetary roller mechanism the two parts of which are engageable with and disengageable from each other and are connected respectively to the driving shaft in the low-speed rotary unit (A) and to the driving shaft in the high speed rotary unit (B).

2. A separable rotary tool adapter according to claim 1, wherein one part of the planetary roller mechanism is mounted on a rotary shaft (5) engaged orthogonally via a transmission mechanism (7,8) with the rotary shaft (3) in the low-speed rotary unit which can be joined to the driving shaft in the head of the machine tool.

3. A separable rotary tool adapter according to claim 1 or 2, wherein one part of the planetary roller mechanism consists of an assembly of a fixed race (24), planetary rollers (25) and a sun roller (22), and the other part is composed of planetary roller driving means (9,10) engageable with and disengageable from the planetary rollers (25).

4. A separable rotary tool adapter according to claim 3, wherein, in the assembled state of the units, the race (24) installed in one of the units is retained in position by abutment on the other unit.

5. A separable rotary tool adapter according to claim 3 or 4 wherein the planetary roller driving means (9,10) is detachable from the unit in which it is mounted.

6. A set of adapter units including a separable rotary tool adapter as claimed in any preceding claim and an additional low speed unit, one of the low-speed units providing a straight transmission and the other providing an angled transmission.

## Patentansprüche

1. Abnehmbarer Drehwerkzeugadapter, umfassend einerseits ein Niedergeschwindigkeits-Drehaggregat (A), welches mit einem Gehäuse (2) Versehen ist, das in entfernbarer Weise an den Kopf einer Werkzeugmaschine befestigbar ist, und eine Drehwelle (3), die an dem Gehäuse (2) drehbar gelagert und mit einem Ende an eine Antriebswelle im Kopf der Werkzeugmaschine anschließbar ist, und andererseits ein Hochgeschwindigkeits-Drehaggregat (B), welches mit einem Gehäuse (15) versehen ist, das in entfernbarer Weise an das Gehäuse (2) des Niedergeschwindigkeits-Drehaggregats (A) befestigbar ist, und eine Drehwelle (20), die an dem zweiten Gehäuse (15) drehbar gelagert ist und an ihrem freien Ende direkt oder indirekt mit einem Drehwerkzeug in Eingriff bringbar ist, wobei die Niedergeschindigkeits- und Hochgeschwindigkeitsaggregate (A, B) jeweils einen Teil eines zweiteiligen Planetenrollenmechanismus enthalten, dessen beide Teile miteinander in oder außer Eingriff bringbar sind und jeweils mit der Antriebswelle in dem Niedergeschwindigkeits-Drehaggregat (A) bzw. der Antriebswelle in dem Hochgeschwindigkeits-Drehaggregat (B) verbunden sind.

2. Abnehmbarer Drehwerkzeugadapter nach Anspruch 1, bei dem ein Teil des Planetenrollenmechanismus auf eine Drehwelle (5) aufgesetzt ist, die orthogonal über einen Übertragungsmechanismus (7, 8) mit der Drehwelle (3) in dem Niedergeschwindigkeits-Drehaggregat in Eingriff steht, welche mit der Antriebswelle im Kopf der Werkzeugmaschne verbindbar ist.

3. Abnehmbarer Drehwerkzeugadapter nach Anspruch 1 oder 2, bei dem ein Teil des Planetenrollenmechanismus aus einem Zusammenbau aus einem feststehenden Laufring (24), Planetenrollen (25) und einer Sonnenrolle (22) besteht, und der andere Teil aus einer Planetenrollenantriebseinrichtung (9, 10) besteht, die mit den Planetenrollen (25) in oder außer Eingriff bringbar ist.

4. Abnehmbarer Drehwerkzeugadapter nach Anspruch 3, bei dem in dem zusammengebauten Zustand der Aggregate der in einem der Aggregate installierte Laufring (24) durch Anliegen gegen das andere Aggregat in seiner Lage gehalten wird.

5. Abnehmbarer Drehwerkzeugadapter nach Anspruch 3 oder 4, bei dem die Planetenrollenantriebseinrichtung (9, 10) von dem Aggregat, in dem sie eingebaut ist, entfernbar ist.

6. Satz aus Adapteraggregaten, umfassend einen abnehmbaren Drehwerkzeugadapter wie in einem der vorstehenden Ansprüche beansprucht, und ein zusätzliches Niedergeschwindigkeitsaggregat, wobei eines der Niedergeschwindigkeitsaggregate eine gerade Übertragung vorsieht und die andere eine Übertragung im Winkel vorsieht.

## Revendications

1. Adaptateur amovible pour outil rotatif comprenant, d'une part, une unité rotative lente (A), dotée d'un carter (2) susceptible d'être fixé de manière amovible sur la tête d'une machine-outil, et d'un axe rotatif (3) supporté en rotation par le carter (2) et susceptible d'être raccordé à l'une de ses extrémités à un axe d'entraînement à l'intérieur de la tête de la machine-outil, et d'autre part, une unité rotative rapide (B), dotée d'un carter (15) susceptible d'être fixé de manière amovible sur le carter (2) de l'unité rotative lente (A), et d'un axe rotatif (20) supporté en rotation par le second carter (15) et susceptible d'engager directement ou indirectement un outil rotatif au niveau de son extrémité libre ; les unités rotatives lente ou rapide (A, B) comprenant chacune une partie d'un mécanisme bicomposant à rouleaux satellites dont les deux parties peuvent s'engager l'une avec l'autre et se désengager l'une de l'autre et sont respectivement raccordées à l'axe d'entraînement de l'unité rotative lente (A) et à l'axe d'entraînement de l'unité rotative rapide (B).

2. Adaptateur amovible pour outil rotatif selon la revendication 1, caractérisé en ce qu'une partie du mécanisme à rouleaux satellites est montée sur un axe rotatif (5) engagé orthogonalement au moyen d'un mécanisme de transmission (7, 8) avec l'axe rotatif (3) dans l'unité rotative lente susceptible d'être raccordé à l'axe d'entraînement dans la tête de la machine-outil.

3. Adaptateur amovible pour outil rotatif selon la revendication 1 ou 2, caractérisé en ce qu'une partie du mécanisme à rouleaux satellites consiste en un ensemble formé d'une bague de roulement fixe (24), de rouleaux satellites (25) et d'un rouleau planétaire (22), et en ce que l'autre partie est composée de moyens de commande des rouleaux satellites (9, 10) susceptibles de s'engager avec les rouleaux satellites (25) et de se désengager de ces derniers.

4. Adaptateur amovible pour outil rotatif selon la revendication 3, caractérisé en ce que, lorsque les unités sont à l'état assemblé, la bague de roulement (24) installée dans l'une des unités est retenue en position par le fait qu'elle vient buter contre l'autre unité.

5. Adaptateur amovible pour outil rotatif selon la revendication 3 ou 4, caractérisé en ce que les moyens de commande de rouleaux satellites (9, 10) peuvent être détachés de l'unité dans laquelle ils sont montés.

6. Ensemble d'éléments d'adaptation comprenant un adaptateur amovible pour outil rotatif selon l'une quelconque des revendications précédentes et une unité lente supplémentaire, l'une des unités lentes assurant une transmission droite tandis que l'autre unité lente assure une transmission angulaire.
